(19) Europäisches Patentamt
European Patent Office
Office européen des brevets

(11) **EP 3 757 601 B1**

(12) **FASCICULE DE BREVET EUROPEEN**

(45) Date de publication et mention
de la délivrance du brevet:
**30.08.2023 Bulletin 2023/35**

(51) Classification Internationale des Brevets (IPC):
**G01S 7/48** *(2006.01)* **G05D 1/02** *(2020.01)*
**G01S 13/931** *(2020.01)* **G01S 13/86** *(2006.01)*

(21) Numéro de dépôt: **20182586.6**

(22) Date de dépôt: **26.06.2020**

(52) Classification Coopérative des Brevets (CPC):
**G01S 7/4808; G01S 13/865; G01S 13/931;**
**G05D 1/024; G05D 1/0257; G05D 1/0274**

(54) **PROCÉDÉ ET SYSTÈME POUR CARTOGRAPHIER UN ENVIRONNEMENT PHYSIQUE AU MOYEN D'UNE GRILLE D'OCCUPATION**

VERFAHREN UND SYSTEM ZUR KARTOGRAPHISCHEN AUFZEICHNUNG EINER PHYSISCHEN UMGEBUNG MIT HILFE EINES OKKUPATIONSRASTERS

METHOD AND SYSTEM FOR MAPPING A PHYSICAL ENVIRONMENT BY MEANS OF AN OCCUPANCY GRID

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **28.06.2019 FR 1907103**

(43) Date de publication de la demande:
**30.12.2020 Bulletin 2020/53**

(73) Titulaire: **Aptiv Technologies Limited**
**St. Michael (BB)**

(72) Inventeurs:
• **Markiewicz, Pawel**
**31-559 KRAKOW (PL)**
• **Porebski, Jakub**
**30-091 KRAKAU (PL)**
• **Sasin, Dominik**
**30-109 KRAKOW (PL)**

(74) Mandataire: **Vigand, Philippe et al**
**Novagraaf International SA**
**Chemin de l'Echo 3**
**1213 Onex - Genève (CH)**

(56) Documents cités:
**EP-A1- 3 364 213      WO-A1-2019/068214**
**US-A1- 2017 269 201**

**Description**

**[DOMAINE TECHNIQUE**

La présente description concerne la génération de cartographies d'environnements physiques autour de capteurs, notamment dans le domaine des véhicules automobiles, en particulier celui des véhicules automobiles autonomes et/ou équipés d'un ou plusieurs systèmes d'aide à la conduite avancés. La présente description se réfère plus spécifiquement à un procédé simplifié et un système correspondant pour cartographier un environnement physique autour d'un capteur, ainsi qu'à un procédé de conduite d'un véhicule automobile équipé du capteur et au véhicule correspondant.

**ART ANTÉRIEUR**

Avec le développement actuel des véhicules automobiles autonomes et/ou équipés de systèmes d'aide à la conduite avancés ou ADAS (de l'anglais « Advanced Driver Assistance Systems »), de nombreuses techniques sont développées pour estimer, de façon sure, l'environnement du véhicule à partir d'un grand nombre de données issues d'un ou plusieurs capteurs du véhicule, tels que des lidars et/ou des radars. Une approche largement utilisée consiste à détecter des objets ou obstacles dans l'environnement du véhicule, à l'aide d'un ou plusieurs capteurs, puis à transformer les données brutes issues des capteurs en une grille d'occupation contenant des cellules associées à des probabilités d'occupation respectives. La probabilité d'occupation de chaque cellule est calculée en utilisant un algorithme appelé « Inverse Sensor Model » (ou « Modèle de capteur inverse ») qui convertit les données détectées et des informations additionnelles en probabilités d'occupation. Les capteurs utilisés sont des capteurs d'estimation de distance, par exemple des radars et/ou des lidars.

La génération d'une telle cartographie sous la forme d'une grille d'occupation, dans un environnement automobile, nécessite de traiter un très grand nombre de données en un court laps de temps. La complexité des calculs et le temps d'exécution sont des aspects cruciaux pour obtenir une méthode robuste permettant d'établir l'occupation des cellules sur la grille représentant l'environnement.

Le document US 2017/269201 A1 décrit une méthode d'estimation d'un environnement environnant à partir de données d'observation obtenues à l'aide d'un équipement de détection.

La présente description vise à améliorer la situation, et notamment à simplifier l'établissement d'une cartographie de l'environnement autour d'un capteur.

**RÉSUMÉ**

Dans ce but et dans un premier aspect, la présente description concerne un procédé tel que défini par la revendication 1.

Le procédé permet de fournir des informations sur un objet de l'environnement, tel qu'un obstacle, afin d'évaluer la situation aux alentours du capteur. Ces informations peuvent ensuite être utilisées pour déterminer un espace de conduite d'un véhicule automobile et effectuer la planification d'un trajet.

Le procédé permet de réduire la complexité des calculs pour déterminer les valeurs de probabilité d'occupation des cellules de la grille d'occupation, notamment grâce au fait que la distribution des valeurs probables est effectuée selon une seule dimension du système de coordonnées du capteur. Il en résulte un effort de calcul requis réduit.

Avantageusement, l'une des deux dimensions du système de coordonnées du capteur est choisie, pour la mise en oeuvre de ladite étape d'identification d'un segment, en fonction de caractéristiques du capteur d'estimation de la distance relatives à une incertitude de mesure selon chacune des deux dimensions du système de coordonnées du capteur.

Avantageusement encore, le système de coordonnées du capteur est un système de coordonnées polaires dans lequel chaque point est représenté par une distance et un azimut, et, dans le cas où l'incertitude de mesure du capteur est considérée comme négligeable, car inférieure à un seuil prédéfini, dans la dimension azimut, le segment représentant un intervalle de distribution de valeurs probables relatives à la position potentielle mesurée est un segment de la droite définie par la position potentielle mesurée et une origine du système de coordonnées du capteur, le milieu dudit segment correspondant à la position potentielle mesurée.

Avantageusement encore, le système de coordonnées du capteur est un système de coordonnées polaires dans lequel chaque point est représenté par une distance et un azimut et, dans le cas où l'incertitude de mesure du capteur est considérée comme négligeable, car inférieure à un seuil prédéfini, dans la dimension distance, le segment représentant un intervalle de distribution de valeurs probables relatives à la position potentielle mesurée est un arc de cercle.

Avantageusement encore, le procédé comprend une étape d'approximation lors de laquelle ledit arc de cercle est approximé par un segment de droite perpendiculaire à la direction d'une ligne définie par la position potentielle mesurée et un point d'origine du système de coordonnées du capteur. Une telle approximation simplifie encore davantage les calculs pour traiter l'incertitude de l'azimut en permettant une identification simplifiée et précise des cellules potentiellement occupées.

Avantageusement encore, la valeur approximative de probabilité attribuée à ladite cellule potentiellement occupée est la valeur de probabilité donnée par la fonction de densité de probabilité au point milieu de la portion de segment incluse dans ladite cellule potentiellement occupée.

Ainsi, une simplification supplémentaire des calculs repose sur une substitution de l'intégration de la fonction de probabilité sur l'intervalle de distribution par une approximation de l'intégrale à l'aire d'un rectangle.

Le capteur peut être un lidar, un radar, une caméra ou tout autre dispositif apte à mesurer des données relatives à la position d'un objet.

Avantageusement encore, dans le cas où le capteur est un lidar, ou plus généralement un capteur avec une grande précision de mesure en azimut, la dimension distance est choisie pour la mise en oeuvre de ladite étape d'identification d'un segment.

Avantageusement encore, dans le cas où le capteur est un radar, ou plus généralement un capteur avec une grande précision de mesure en distance, la dimension azimut est choisie pour la mise en oeuvre de ladite étape d'identification d'un segment.

Un second aspect concerne un procédé de détection d'un obstacle comportant la génération d'une cartographie d'un environnement physique par la mise en oeuvre du procédé précédemment défini et une étape de détection d'un obstacle dans ledit environnement sur la base de la cartographie générée.

Un troisième aspect concerne un procédé de conduite d'un véhicule automobile autonome ou d'aide à la conduite d'un véhicule automobile équipé d'au moins un système d'aide à la conduite avancé, caractérisé en ce qu'il comprend une opération de génération d'une cartographie d'un environnement physique du véhicule par la mise en oeuvre du procédé précédemment défini.

Un quatrième aspect concerne un système selon la revendication 11.

Un cinquième aspect concerne un système de détection d'un obstacle intégrant le système pour cartographier un environnement physique tel que précédemment défini et un module de détection d'un obstacle dans ledit environnement sur la base de la cartographie générée.

Un sixième aspect concerne un véhicule automobile autonome ou équipé d'au moins un système d'aide à la conduite avancé, intégrant un système, tel que précédemment défini, pour cartographier un environnement physique dudit véhicule au moyen d'une grille d'occupation contenant un ensemble de cellules définies par des probabilités d'occupation respectives.

## BRÈVE DESCRIPTION DES FIGURES

D'autres caractéristiques et avantages de la présente description apparaîtront plus clairement à la lecture de la description détaillée qui va suivre et qui présente différents modes de réalisation donnés à titre d'exemples nullement limitatifs et illustrés par les figures annexées dans lesquelles :

[Fig. 1] représente un schéma d'un système pour cartographier un environnement physique au moyen d'une grille d'occupation contenant un ensemble de cellules définies par des probabilités d'occupation respectives, selon une forme de réalisation particulière ;

[Fig. 2] représente un organigramme d'un procédé pour cartographier un environnement physique au moyen d'une grille d'occupation contenant un ensemble de cellules définies par des probabilités d'occupation respectives, selon un mode de réalisation particulier ;

[Fig. 3] représente une grille d'occupation vierge (sans cellule occupée) ;

[Fig. 4] représente un capteur, un point correspondant à une position potentielle mesurée par le capteur et un intervalle de distribution de valeurs probables relatives à la position potentielle mesurée dans une dimension de distance d'un système de coordonnées du capteur ;

[Fig. 5] représente un capteur, un point correspondant à une position potentielle mesurée par le capteur et un intervalle de distribution de valeurs probables relatives à la position potentielle mesurée dans une dimension d'azimut d'un système de coordonnées du capteur ;

[Fig. 6] représente le capteur et le point mesuré de la figure 4, avec une courbe représentant une fonction de densité de probabilité pour la dimension distance de l'intervalle de distribution ;

[Fig. 7] représente une approximation de l'intervalle de distribution de la figure 5 ;

[Fig. 8a] représente une cellule de la grille d'occupation de la figure 3, traversée par un segment correspondant à l'intervalle de distribution de la figure 4 ou 5, et deux points d'intersection ;

[Fig. 8b] représente la cellule de la figure 8a et deux autres points d'intersection ;

[Fig. 8c] représente la cellule des figures 8a et 8b et deux points d'intersection sélectionnés ;

[Fig. 9] représente un segment, correspondant à l'intervalle de distribution de la figure 4 ou 5, et une courbe associée représentant une fonction de densité de probabilité appliquée aux points de l'intervalle de distribution, ainsi qu'un rectangle dont la surface correspond à la probabilité d'occupation approximée d'une cellule ;

[Fig. 10] est une représentation plus détaillée de la figure 9, incluant une représentation de toutes les cellules traversées par le segment correspondant à l'intervalle de distribution de la figure 4 ou 5, et associées à des probabilités d'occupation calculées respectives ;

[Fig. 11] représente uniquement la grille d'occupation obtenue à partir des probabilités d'occupation calculées telles que représentées sur la figure 10.

## DESCRIPTION DÉTAILLÉE

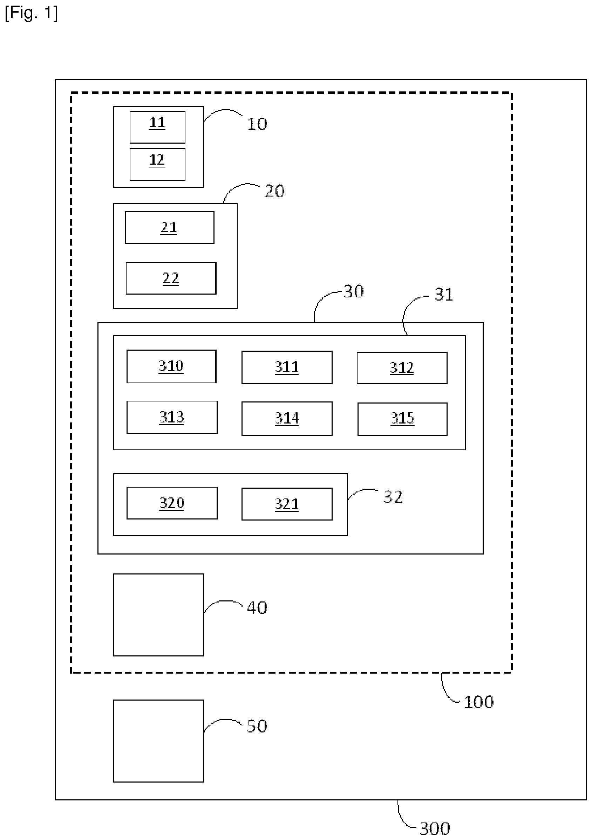

La figure 1 représente un exemple de réalisation particulier d'un système 100 pour cartographier un environnement physique au moyen d'une grille d'occupation 200 contenant un ensemble de cellules $g_{ij}$ affectées de probabilités d'occupation respectives.

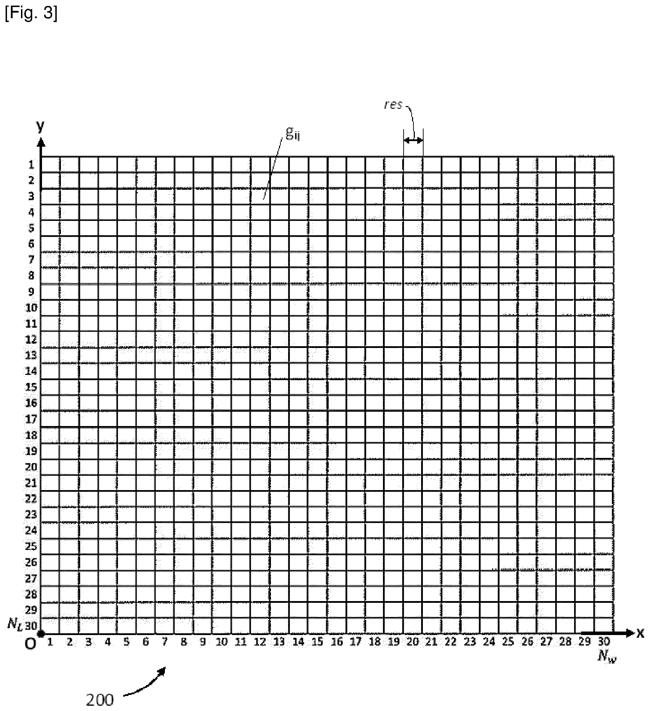

A titre d'exemple illustratif, la figure 3 représente une grille d'occupation 200 à deux dimensions (x,y) dans un système de coordonnées de la grille 200, par exemple un système de coordonnées cartésiennes. La grille d'occupation 200 est utilisée pour paver ou discrétiser une représentation de l'environnement, sous la forme d'un ensemble de cellules $g_{ij}$ disposées en lignes et en colonnes, comme représenté sur la figure 3. Sur cette figure 3, la grille 200 est composée de $N_L \times N_W$ cellules $g_{ij}$, de forme carrée et de même dimension, formant un quadrillage. Nw représente le nombre de cellules $g_{ij}$ en abscisses et $N_L$ représente le nombre de cellules $g_{ij}$ en ordonnées. Le point origine O du système de coordonnées de la grille 200 correspond au sommet d'origine de la grille 200 en bas à gauche sur la figure 3. La résolution spatiale, notée res, de la grille 200 correspond à la dimension d'un côté d'une cellule $g_{ij}$ . Une position sur la grille 200 peut être décrite dans le système de coordonnées cartésiennes de la grille par des distances physiques en abscisses x et en ordonnées y, par exemple exprimées en mètres. Chaque cellule $g_{ij}$ occupe une position donnée dans la grille 200, qui est connue et définie par un indice i, ici compris entre 1 et $N_L$, et un indice j, ici compris entre 1 et Nw.

Le système 100 est par exemple intégré dans un véhicule automobile (non représenté) et permet d'établir une cartographie aux alentours du véhicule sous la forme d'une grille d'occupation 200, analogue à celle de la figure 3, dont les cellules sont associées à des probabilités d'occupation respectives. Ces probabilités d'occupation sont par exemple des valeurs comprises entre 0 et 1, la valeur "0" correspondant à une cellule non occupée et la valeur "1" correspondant à une cellule occupée de façon certaine (probabilité d'occupation de 100%, autrement dit égale à 1).

Le système 100 comprend un dispositif de mesure 10 pour mesurer une position potentielle μ d'un objet (tel qu'un obstacle), un module 20 d'identification d'un segment correspondant à un intervalle de distribution de valeurs probables (ou positions probables) de la position potentielle mesurée μ, un module 30 d'évaluation de probabilités d'occupation de cellules de la grille 200 et un module 40 de génération d'une grille d'occupation 200.

Le dispositif de mesure 10 comprend au moins un capteur 11 d'estimation de distance et une mémoire de stockage des données brutes mesurée. Le capteur 11 est agencé pour mesurer une position d'un objet (tel qu'un obstacle) de l'environnement physique du capteur 11 et fournir, pour la position mesurée, des données mesurées comportant une première coordonnée, selon une première dimension, et une deuxième coordonnée, selon une deuxième dimension, dans un système de coordonnées du capteur à au moins deux dimensions. Par exemple, le système de coordonnées du capteur 11 est un système de coordonnées polaires dans lequel chaque point est représenté par une distance r et un azimut (angle) α par rapport à un axe polaire (équivalent à l'axe des abscisses x en coordonnées cartésiennes, dans le système de coordonnées de la grille 200). Dans ce cas, le capteur 11 mesure et fournit des données d'une position détectée comportant une distance r et un azimut α. Les données ainsi mesurées sont stockées, au moins provisoirement, dans la mémoire 12.

Le module d'identification 20 est destiné à identifier un segment S (ou section de ligne), représentant un intervalle de distribution de valeurs probables relatives à la position potentielle mesurée μ, qui s'étend selon l'une seule des deux dimensions du système de coordonnées du capteur. Ainsi, le segment S s'étend soit en distance (avec un azimut fixe), soit en azimut (avec une distance fixe). L'intervalle de distribution, représenté graphiquement par le segment S, représente une incertitude sur la position mesurée µ selon l'une seule des deux dimensions du système de coordonnées du capteur 11, c'est-à-dire ici soit l'incertitude sur la distance r mesurée, soit l'incertitude sur l'azimut α mesuré. Le traitement de l'incertitude de mesure selon l'une seule des dimensions, en négligeant la dimension dans laquelle le capteur 11 offre une grande précision de mesure, permet de réduire de façon conséquente la complexité des calculs pour déterminer les valeurs de probabilité d'occupation des cellules de la grille d'occupation, tout en permettant d'effectuer des calculs précis.

Le module d'évaluation 30 est destiné à évaluer une probabilité d'occupation de chacune d'une pluralité de cellules $c_i$ potentiellement occupées de la grille d'occupation 200, ces cellules $c_i$ étant celles pénétrées par le segment S identifié par le module d'identification 20, avec $1 \leq i \leq N$ et N étant le nombre total de cellules pénétrées par le segment S. Le module d'évaluation 30 comprend :

- une unité 31 de détermination de caractéristiques d'une portion de segment $x_i$, incluse dans chacune des cellules $c_i$ potentiellement occupées ;
- une unité 32 de calcul d'une probabilité d'occupation de chacune des cellules $c_i$ potentiellement occupées en fonction de la portion de segment $x_i$ déterminée et à l'aide d'une fonction de densité de probabilité $\varphi$.

Le système de cartographie 100 peut être intégré dans un système 300 de détection d'un obstacle comprenant, outre les éléments 10, 20, 30 et 40 du système 100, un module 50 de détection d'un obstacle utilisant la cartographie générée de l'environnement, c'est-à-dire la grille de cellules $g_{ij}$ respectivement associées à des probabilités d'occupation.

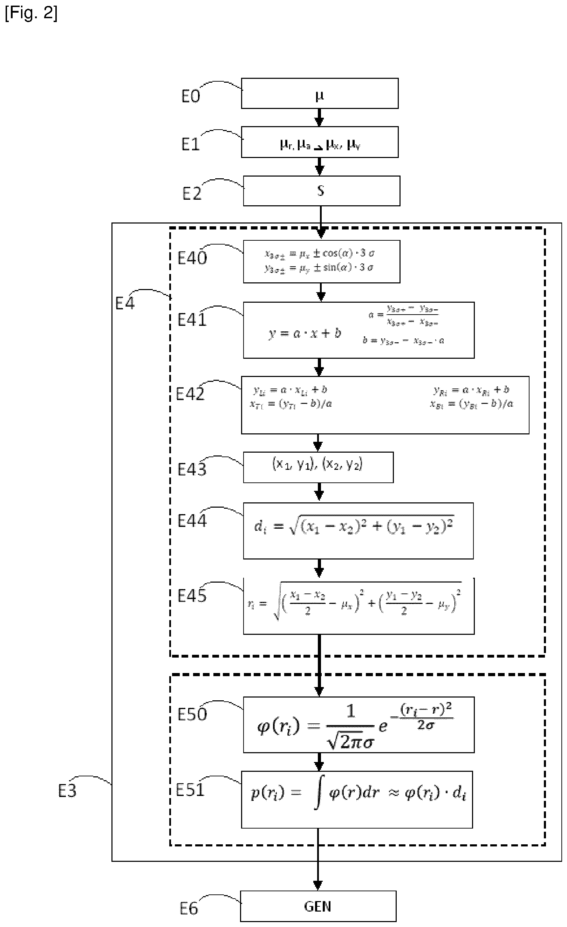

On va maintenant décrire, en référence à la figure 2, un procédé pour cartographier l'environnement physique du capteur 11 au moyen d'une grille d'occupation 200 contenant un ensemble de cellules $g_{ij}$ associées à des probabilités d'occupation respectives, selon un mode de réalisation particulier. Le procédé est mis en oeuvre par le système 100.

Le procédé comprend d'abord une étape de mesure E0, ici à l'aide du capteur 11 d'estimation de distance, d'une position potentielle µ d'un objet de l'environnement physique du capteur. Le capteur 11 est par exemple un radar ou un lidar ou tout autre capteur adapté pour évaluer une distance entre lui-même et un objet ou obstacle de l'environnement. Lors de l'étape de mesure E0, le capteur 11 fournit, pour la position potentielle mesurée µ, une première coordonnée, selon une première dimension, et une deuxième coordonnée, selon une deuxième dimension, dans un système de coordonnées à au moins deux dimensions du capteur 11. Dans l'exemple décrit ici, le système de coordonnées du capteur 11 est un système de coordonnées polaires à deux dimensions dans lequel chaque point est représenté par une distance r et un azimut α par rapport à un axe polaire (équivalent à l'axe des abscisses en coordonnées cartésiennes, dans le système de coordonnées de la grille 200). Le capteur 11 fournit une coordonnée de distance $\mu_r$ et une coordonnée d'azimut $\mu_\alpha$ pour le point dont la position potentielle µ est mesurée par le capteur 11.

Lors d'une étape E1 de conversion de coordonnées, des coordonnées cartésiennes $\mu_x$ et $\mu_y$ de la position potentielle mesurée µ dans le système de coordonnées de la grille d'occupation 200 sont calculées, à partir des coordonnées polaires de distance $\mu_r$ et d'azimut $\mu_\alpha$ de la position potentielle µ mesurée et de la position connue du capteur 11 dans le système de coordonnées cartésiennes de la grille 200 (cette position étant définie par des coordonnées cartésiennes en x et y du capteur 11 dans le système de coordonnées de la grille 200). L'étape E1 est mise en oeuvre par une unité de conversion 21 du module d'identification 20.

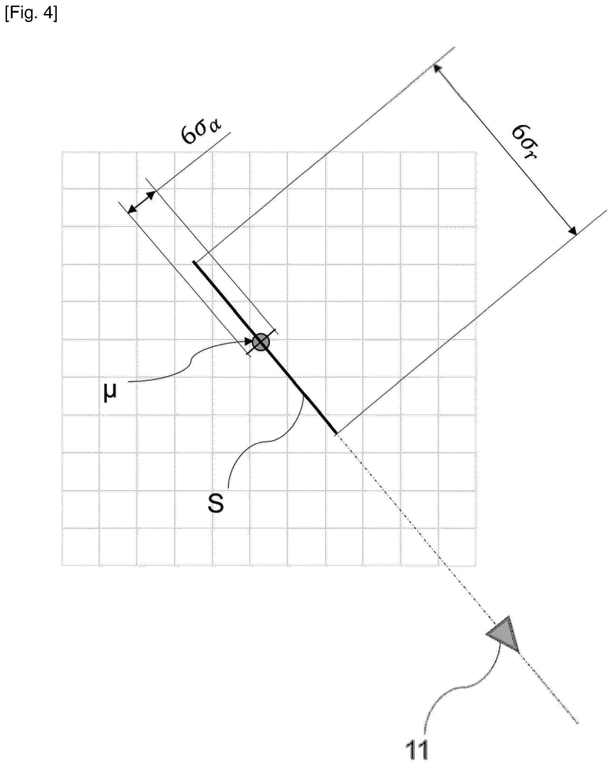

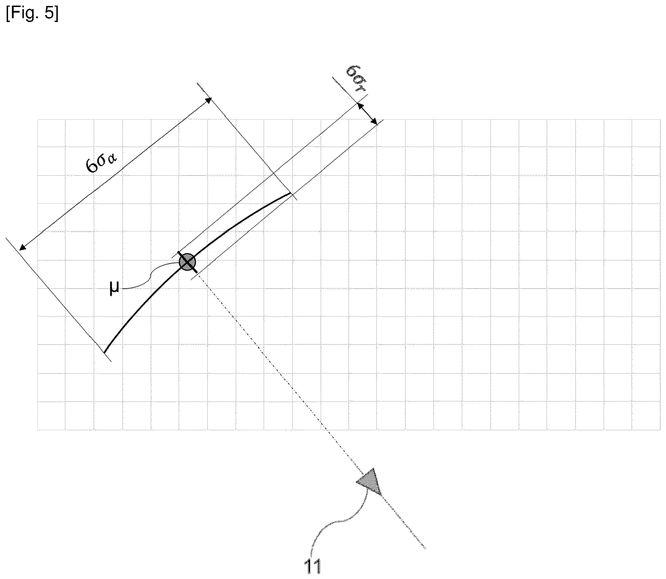

Le procédé comprend également une étape E2 d'identification d'un segment S représentant un intervalle de distribution de valeurs probables relatives à la position potentielle mesurée µ. Lors cette étape E2, une unité de calcul 22 du module d'identification 20 détermine un intervalle de distribution de valeurs probables relatives à la position potentielle mesurée µ. Cet intervalle de distribution correspond à un ensemble de positions probables du point dont la position potentielle µ a été mesurée par le capteur 11. En effet, en raison de caractéristiques du capteur 11, notamment de la précision de mesure du capteur 11 en distance et en azimut, il existe une incertitude sur les valeurs des coordonnées de la position mesurée par le capteur 11. Dans le système de coordonnées du capteur 11, l'intervalle de distribution peut être représenté par un segment S, comme représenté sur les figures 4 et 5. Ce segment s'étend selon l'une seule des deux dimensions du système de coordonnées du capteur 11. En d'autres termes, dans l'exemple décrit ici, le segment S est défini soit par un intervalle borné de distances et un azimut donné (figure 4), soit par un intervalle angulaire borné et une distance donnée (figure 5). Il peut donc être soit une portion de droite (figure 4), dans le cas d'un segment s'étendant seulement dans la dimension distance r, soit un arc de cercle (figure 5), dans le cas d'un segment s'étendant seulement dans la dimension angulaire α.

Dans le premier cas (figure 4), les valeurs probables relatives à la position potentielle mesurée µ comprennent une plage de distances r associées à une valeur d'azimut fixe. La distance au milieu de cette plage et l'azimut associé sont les coordonnées polaires de la position potentielle mesurée µ dans le système de coordonnées du capteur 11.

Dans le second cas (figure 5), les valeurs probables relatives à la position potentielle mesurée µ comprennent une plage d'angles α associés à une valeur de distance fixe. L'angle au milieu de cette plage et la distance associée sont les coordonnées polaires de la position potentielle mesurée µ dans le système de coordonnées du capteur 11.

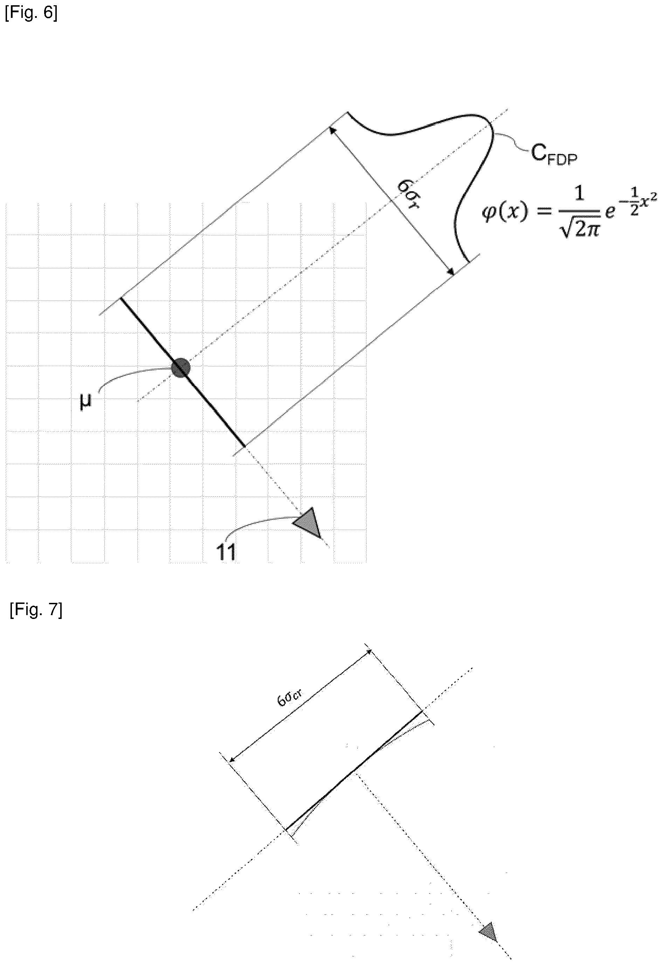

Les valeurs probables relatives à la position potentielle mesurée $\mu$ sont associées à des valeurs de probabilité données par une fonction de densité de probabilité $\varphi$. La valeur de probabilité d'un point du segment S représente la probabilité que la détection (c'est-à-dire l'objet détecté par le capteur 11) soit positionnée en ce point. La fonction de densité de probabilité $\varphi$ peut être représentée graphiquement par une courbe $C_{FDP}$ qui associe à chacune des valeurs de l'intervalle de distribution, représenté graphiquement par le segment S, des valeurs de probabilité. Sur la figure 6, à titre d'exemple illustratif, on a représenté graphiquement la courbe $C_{FDP}$ associée au segment S de la figure 4. Dans cet exemple, la fonction de densité de probabilité $\varphi$ est une fonction gaussienne. On pourrait choisir un autre type de fonction de densité de probabilité. La courbe $C_{FDP}$ présente un sommet qui correspond à la position potentielle mesurée $\mu$. Autrement dit, le sommet de la courbe $C_{FDP}$ est l'image de la position mesurée $\mu$ par la fonction de densité de probabilité $\varphi$. De préférence, la courbe $C_{FDP}$ est symétrique par rapport à un axe central passant par son sommet. Par exemple, la fonction de densité de probabilité $\varphi$ est exprimée par la relation suivante :

$$\varphi(x) = \frac{1}{\sqrt{2\pi}} e^{-\frac{1}{2}x^2}$$

où x représente une distance depuis le point de détection $\mu$ (position potentielle détectée) le long de l'axe connectant ledit point $\mu$ et le capteur 11.

La longueur du segment S (autrement dit la largeur de l'intervalle de distribution) est choisie de manière à ce que la somme des valeurs de probabilité associées à chacun des points du segment (autrement dit l'intégrale de la fonction de densité de probabilité $\varphi$ sur l'intervalle de distribution) soit supérieure ou égale à une valeur de probabilité cible, par exemple 0,99.

Par exemple, « $\sigma$ » désignant l'écart type de la fonction de densité de probabilité $\varphi$, la largeur de l'intervalle de distribution est choisie égal à $6\sigma$. L'écart type est noté $\sigma_r$ dans le cas où l'incertitude sur l'azimut est négligeable (figure 4) et $\sigma_\alpha$ dans le cas où l'incertitude sur la distance est négligeable (figure 5). Sur les figures 4 à 6, les symboles $\sigma_\alpha$ et $\sigma_r$ représentent l'écart type de la fonction de densité de probabilité $\varphi$ relative à la mesure d'azimut $\alpha$ et l'écart type de la fonction de densité de probabilité $\varphi$ relative à la mesure distance, respectivement.

L'une des deux dimensions du système de coordonnées du capteur 11 est choisie - c'est-à-dire soit la distance (figure 4) soit l'azimut (figure 5) - pour la mise en oeuvre l'étape d'identification d'un segment, en fonction de caractéristiques du capteur 11 relatives à une incertitude de mesure selon chacune des deux dimensions du système de coordonnées du capteur 11.

Dans le cas où l'incertitude de mesure du capteur 11 est considérée comme négligeable, car inférieure à un seuil prédéfini ($6\sigma_\alpha < res$), dans la dimension azimut, le segment S représentant un intervalle de distribution de valeurs probables relatives à la position potentielle mesurée $\mu$ est un segment de la droite définie par la position potentielle mesurée $\mu$ et une origine du système de coordonnées du capteur, le milieu dudit segment correspondant à la position potentielle mesurée $\mu$. Ainsi, la dimension distance est choisie pour identifier un segment S tel que celui de la figure 4.

Dans le cas où l'incertitude de mesure du capteur 11 est considérée comme négligeable, car inférieure à un seuil prédéfini, dans la dimension distance (par exemple $6\sigma_r < res$), le segment représentant un intervalle de distribution de valeurs probables relatives à la position potentielle mesurée $\mu$ est un arc de cercle. Ainsi, la dimension azimut est choisie pour identifier un segment S tel que celui représenté sur la figure 5. Dans ce cas, le procédé peut avantageusement comprendre une étape d'approximation lors de laquelle l'arc de cercle correspondant au segment S est approximé par un segment de droite qui est perpendiculaire à la direction d'une ligne définie par la position potentielle mesurée $\mu$ et un point d'origine du système de coordonnées du capteur 11 (ce point origine représentant le capteur 11 lui-même), comme représenté sur la figure 7. Une telle approximation simplifie les calculs pour traiter une incertitude en azimut en permettant une identification simplifiée et précise des cellules potentiellement occupées.

Dans le cas où le capteur 11 est un lidar, la dimension distance est choisie pour l'identification du segment S (figure 4). Dans le cas où le capteur 11 est un radar, la dimension azimut est choisie pour l'identification du segment S (figure 5).

Comme montré sur les figures 4 et 5, le segment S identifié pénètre un sous-ensemble de cellules potentiellement occupées de la grille d'occupation 200, notées $c_i$ avec i allant de 1 à N dans la présente description. Pour chaque cellule $c_i$ potentiellement occupée de ce sous-ensemble, une étape E3 d'évaluation d'une probabilité d'occupation de ladite cellule potentiellement occupée est mise en oeuvre. L'étape d'évaluation E3 comprend

- une étape E4 de détermination de caractéristiques d'une portion $x_i$ du segment S, incluse dans ladite cellule potentiellement occupée $c_i$ d'indice i ;
- une étape E5 de calcul de la probabilité d'occupation de ladite cellule potentiellement occupée d'indice i en fonction des caractéristiques de la portion de segment déterminée et à l'aide de la fonction de densité de probabilité $\varphi$.

L'étape E4 de détermination d'une portion $x_i$ du segment S permet de déterminer des caractéristiques de la portion de segment $x_i$, par exemple la longueur de la portion de segment $x_i$ et la distance $r_i$ entre le milieu de la portion de segment et le point mesuré $\mu$. Elle comprend des étapes de calcul E40 à E45 décrites ci-après, mises en oeuvre par le module de détermination 31.

Les coordonnées d'abscisse et d'ordonnée de la position potentielle mesurée $\mu$ sont notées $\mu_x$ et $\mu_y$ dans le système de coordonnées de la grille 200. Les coordonnées des deux extrémités du segment S, notées par exemple $\mu$+3$\sigma$ et $\mu$-3$\sigma$, dans le système de coordonnées de la grille 200 sont calculées en utilisant l'algorithme de tracé de segment de Bresenham (avec une extension de voisinage à 4 cellules), lors de l'étape E40. Ces coordonnées peuvent s'exprimer par la relation suivante.

$$x_{3\sigma\pm} = \mu_x \pm \cos(\alpha) \cdot 3\,\sigma$$

$$y_{3\sigma\pm} = \mu_y \pm \sin(\alpha) \cdot 3\,\sigma$$

où $\alpha$ représente l'azimut du point $\mu$ et $\sigma$ représente l'écart type de la densité de probabilité utilisée $\varphi$. L'étape E40 est mise en oeuvre par une première unité de calcul 310 du module de détermination 31.

Lors de l'étape E41, les coefficients a et b de l'équation linéaire

$$y = a \cdot x + b$$
,

qui définit la droite qui contient le segment S dans le système de coordonnées de la grille 200, sont calculés par l'unité 31, à partir des coordonnées des extrémités du segment S calculées lors de l'étape E40, en utilisant les relations suivantes :

$$a = \frac{y_{3\sigma+} - y_{3\sigma-}}{x_{3\sigma+} - x_{3\sigma-}}$$

$$b = y_{3\sigma-} - x_{3\sigma-} \cdot a$$

L'étape E41 est mise en oeuvre par une deuxième unité de calcul 311 du module de détermination 31.

Puis, lors d'une étape E42, l'unité 31 détermine chacun des points du segment S constituant les intersections entre les bordures de cellules et la droite déterminée lors de l'étape E41, en utilisant les relations suivantes :

$$y_{Li} = a \cdot x_{Li} + b \qquad\qquad y_{Ri} = a \cdot x_{Ri} + b$$

$$x_{Ti} = (y_{Ti} - b)/a \qquad\qquad x_{Bi} = (y_{Bi} - b)/a$$

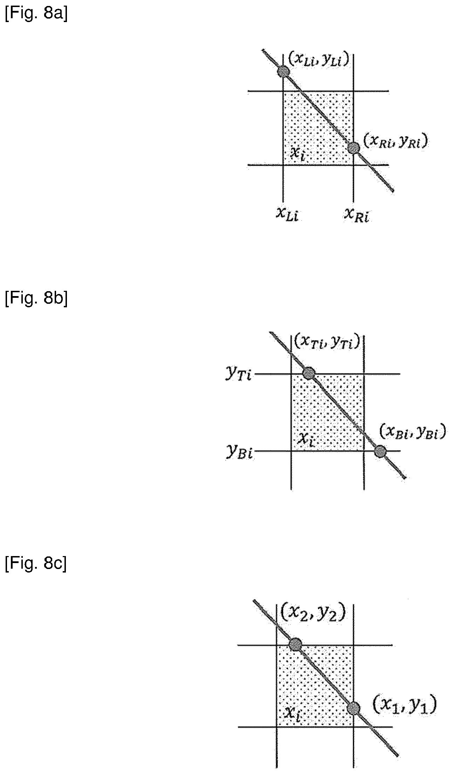

où $x_{Li}$, $x_{Ri}$, $y_{Ti}$, $y_{Bi}$ représentent respectivement les coordonnées fixées des deux lignes verticales, gauche et droite, et des deux lignes horizontales, haute et basse, définissant les bordures d'une cellule d'indice i, comme représenté sur les figures 8a et 8b. L'étape E42 est mise en oeuvre par une troisième unité de calcul 312 du module de détermination 31.

Lors d'une étape E43, l'unité 31 sélectionne les deux points d'intersection qui sont situés en bordure de la cellule considérée d'indice i, représentés sur la figure 8c. On note $(x_1, y_1)$ et $(x_2, y_2)$ ces deux points d'intersection. L'étape E43 est mise en oeuvre par une unité de sélection 313 du module de détermination 31.

Lors d'une étape E44, l'unité 31 calcule la longueur $d_i$ de la portion de segment S incluse dans la cellule d'indice i, en utilisant l'équation suivante :

$$d_i = \sqrt{(x_1 - x_2)^2 + (y_1 - y_2)^2}$$

L'étape E44 est mise en oeuvre par une quatrième unité de calcul 314 du module de détermination 31.

Lors d'une étape 45, l'unité 31 calcule la distance $r_i$ entre le milieu de la portion de segment d'indice i et le point mesuré $\mu$, en utilisant l'équation suivante :

$$r_i = \sqrt{\left(\frac{x_1 - x_2}{2} - \mu_x\right)^2 + \left(\frac{y_1 - y_2}{2} - \mu_y\right)^2}$$

L'étape E40 est mise en oeuvre par une cinquième unité de calcul 315 du module de détermination 31.

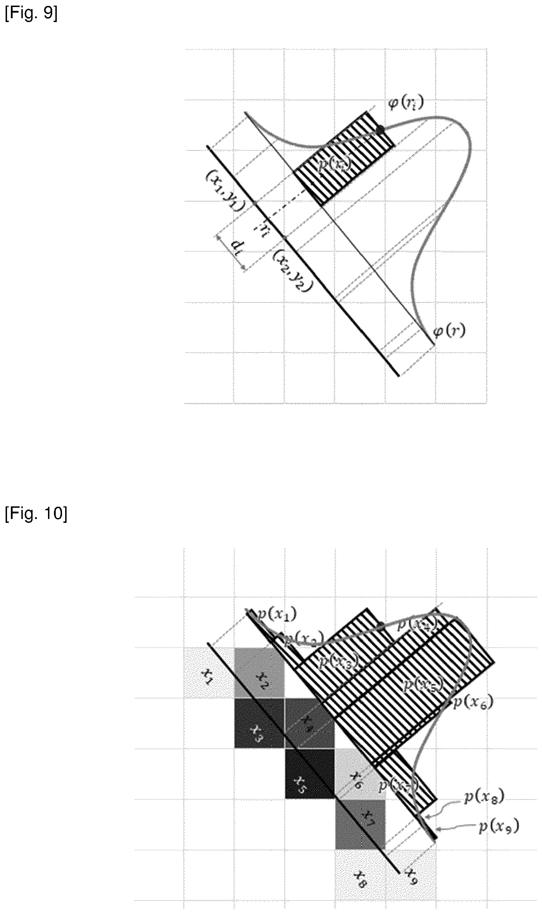

L'étape E5 de calcul de la probabilité d'occupation de la cellule potentiellement occupée d'indice i en fonction des caractéristiques de la portion de segment déterminée $x_i$ et à l'aide de la fonction de densité de probabilité $\varphi$ va maintenant être décrite. Elle est mise en oeuvre par le module de calcul 32 et illustrée par les figures 9 et 10.

Cette étape de calcul E5 comprend une première étape E50 de détermination d'une valeur de probabilité approximative associée à la cellule d'indice i. Par exemple, la valeur de probabilité approximative est égale à la valeur de probabilité associée au point milieu de la portion de de segment $x_i$ (donnée par la fonction de densité de probabilité $\varphi$), ici selon l'équation :

$$\varphi(r_i) = \frac{1}{\sqrt{2\pi\sigma}} e^{-\frac{(r_i - r)^2}{2\sigma}}$$

où r représente ici une variable décrivant la distance le long de l'axe connectant ledit point de détection $\mu$ (position potentielle détectée) et le capteur 11 (même axe que celui précédemment défini en relation avec la variable « x ») et $r_i$ est une valeur au centre de la portion de segment d'indice i ($x_i$), comme représenté sur la figure 9. Cette étape E50 est mise en oeuvre par une première unité de calcul 320 du module de calcul 32.

L'étape de calcul E5 comprend une deuxième étape E51 d'évaluation de la probabilité d'occupation de la cellule d'indice i, notée $p(r_i)$, par l'équation d'approximation suivante :

$$p(r_i) = \int \varphi(r)dr \approx \varphi(r_i) \cdot d_i$$

Cette étape E51 est mise en oeuvre par une deuxième unité de calcul 321 du module de calcul 32.

Ainsi, l'unité 32 calcule une approximation de la probabilité d'occupation $p(r_i)$ de la cellule d'indice i, en calculant l'aire d'un rectangle dont l'une des dimensions correspond à la longueur de la portion de segment incluse dans ladite cellule potentiellement occupée, et l'autre dimension est une valeur approximative $\varphi(r_i)$ de probabilité attribuée à la cellule potentiellement occupée d'indice i. Cela permet une simplification supplémentaire des calculs basée sur une substitution de l'intégration de la fonction de probabilité $\varphi$ sur l'intervalle de distribution (segment S) par une approximation de l'intégrale (résultat de cette intégration) à l'aire d'un rectangle.

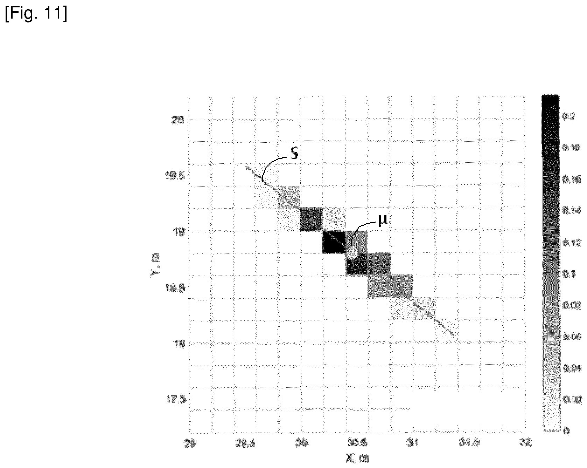

Le procédé comprend ensuite une étape E6 de génération d'une grille d'occupation 200 sur laquelle les probabilités d'occupation respectives des cellules sont représentées par exemple par des couleurs différentes. Par exemple, une cellule ayant une probabilité d'occupation nulle est de couleur blanche et les cellules ayant une probabilité d'occupation non nulle sont représentés en niveaux de gris, plus la cellule étant foncée, plus la probabilité d'occupation étant élevée. Sur la figure 11, on a représenté la grille d'occupation 200 obtenue à partir des probabilités d'occupation calculées et représentées sur la figure 9.

Lors d'une étape de test, on peut vérifier si la somme des valeurs de probabilité d'occupation des cellules potentiellement occupées est proche de 1. Des résultats expérimentaux donnent une valeur de probabilité totale égale à 0.99476 pour la totalité des cellules traversées par le segment S.

Dans un second aspect, la présente description porte sur un procédé de détection d'un obstacle comportant la génération d'une cartographie d'un environnement physique par la mise en oeuvre du procédé qui vient d'être décrit et une étape de détection d'un obstacle dans ledit environnement sur la base de la cartographie générée.

Dans un troisième aspect, la présente description porte sur un procédé de conduite d'un véhicule automobile autonome ou sur un procédé d'aide à la conduite d'un véhicule automobile équipé d'au moins un système d'aide à la conduite avancé, qui comprend une opération de génération d'une cartographie d'un environnement physique du véhicule par la mise en oeuvre du procédé précédemment décrit.

Dans un quatrième aspect, la présente description porte également sur un système de détection d'un obstacle intégrant le système 100 pour cartographier un environnement physique et un module de détection d'un obstacle dans ledit environnement sur la base de la cartographie générée.

Dans un cinquième aspect, la présente description porte également sur un véhicule automobile autonome ou équipé d'au moins un système d'aide à la conduite avancé, intégrant un système 100 pour cartographier un environnement physique dudit véhicule au moyen d'une grille d'occupation contenant un ensemble de cellules définies par des probabilités d'occupation respectives.

Le dispositif de mesure 10 pourrait comprendre plusieurs capteurs d'estimation de distance.

Bien que les objets de la présente description aient été décrits en référence à des exemples spécifiques, diverses modifications et/ou améliorations évidentes pourraient être apportées aux modes de réalisation décrits. 1

## Revendications

1.  Procédé pour cartographier un environnement physique au moyen d'une grille d'occupation (200) contenant un ensemble de cellules ($g_{ij}$) associées à des probabilités d'occupation respectives, ledit procédé comportant une étape de mesure (E0), à l'aide d'au moins un capteur d'estimation de distance (11), d'une position potentielle ($\mu$) d'un objet de l'environnement physique, lors de laquelle le capteur (11) fournit, pour la position potentielle mesurée ($\mu$), une première coordonnée ($\mu_r$), selon une première dimension, et une deuxième coordonnée ($\mu_\sigma$), selon une deuxième dimension, dans un système de coordonnées du capteur (11) à au moins deux dimensions ;

    une étape (E2) d'identification d'un segment (S), représentant un intervalle de distribution de valeurs probables relatives à la position potentielle mesurée, qui s'étend selon l'une seule des deux dimensions du système de coordonnées du capteur, lesdites valeurs probables relatives à la position potentielle mesuré ($\mu$) étant associées à des valeurs de probabilité données par une fonction de densité de probabilité (cp) représentable par une courbe présentant un sommet qui correspond à la position potentielle mesuré ($\mu$);
    et, le segment identifié pénétrant un sous-ensemble de cellules potentiellement occupées ($c_i$) de la grille d'occupation (200), pour chaque cellule ($c_i$) potentiellement occupée dudit sous-ensemble, une étape (E3) d'évaluation d'une probabilité d'occupation de ladite cellule potentiellement occupée ($c_i$) comportant :

    - une étape (E4) de détermination de caractéristiques d'une portion de segment ($x_i$), incluse dans ladite cellule potentiellement occupée ($c_i$), comportant une longueur de ladite portion de segment;
    - une étape (E5) de calcul de la probabilité d'occupation de ladite cellule potentiellement occupée en fonction de la portion de segment déterminée ($x_i$), et à l'aide de la fonction de densité de probabilité (cp), lors de laquelle on effectue une approximation de ladite probabilité d'occupation en calculant l'aire d'un rectangle dont l'une des dimensions correspond à la longueur de la portion de segment incluse dans ladite cellule potentiellement occupée et l'autre dimension est une valeur approximative de probabilité attribuée à ladite cellule potentiellement occupée.

2.  Procédé selon la revendication 1, **caractérisé en ce que** l'une des deux dimensions du système de coordonnées du capteur (11) est choisie pour la mise en oeuvre de ladite étape d'identification d'un segment, en fonction de caractéristiques du capteur d'estimation de la distance (11) relatives à une incertitude de mesure selon chacune des deux dimensions du système de coordonnées du capteur.

3.  Procédé selon l'une des revendications précédentes, **caractérisé en ce que** le système de coordonnées du capteur (11) est un système de coordonnées polaires dans lequel chaque point est représenté par une distance et un azimut, et, dans le cas où l'incertitude de mesure du capteur (11) est considérée comme négligeable, car inférieure à un seuil prédéfini, dans la dimension azimut, le segment (S) représentant un intervalle de distribution de valeurs probables relatives à la position potentielle mesurée est un segment de la droite définie par la position potentielle mesuré ($\mu$) et une origine du système de coordonnées du capteur (11), le milieu dudit segment correspondant à la position potentielle mesuré ($\mu$).

4.  Procédé selon l'une des revendications précédente, **caractérisé en ce que** le système de coordonnées du capteur (11) est un système de coordonnées polaires dans lequel chaque point est représenté par une distance et un azimut et, dans le cas où l'incertitude de mesure du capteur est considérée comme négligeable, car inférieure à un seuil prédéfini, dans la dimension distance, le segment (S) représentant un intervalle de distribution de valeurs probables relatives à la position potentielle mesuré ($\mu$) est un arc de cercle.

5.  Procédé selon la revendication précédente, **caractérisé en ce qu'**il comprend une étape d'approximation lors de laquelle ledit arc de cercle est approximé par un segment de droite perpendiculaire à la direction d'une ligne définie par la position potentielle mesurée et un point d'origine du système de coordonnées du capteur (11).

6. Procédé selon l'une des revendications 1 à 5, **caractérisé en ce que** la valeur approximative de probabilité attribuée à ladite cellule potentiellement occupée est la valeur de probabilité donnée par la fonction de densité de probabilité au point milieu de la portion de segment incluse dans ladite cellule potentiellement occupée.

7. Procédé selon l'une des revendications 3 à 6, dans leur dépendance à la revendication 2, **caractérisé en ce que**, dans le cas où le capteur est un lidar, la dimension distance est choisie pour la mise en oeuvre de ladite étape d'identification d'un segment.

8. Procédé selon l'une des revendications 3 à 6, dans leur dépendance à la revendication 2, **caractérisé en ce que**, dans le cas où le capteur est un radar, la dimension azimut est choisie pour la mise en œuvre de ladite étape d'identification d'un segment.

9. Procédé de détection d'un obstacle comportant la génération d'une cartographie d'un environnement physique par la mise en oeuvre du procédé selon l'une des revendications 1 à 8 et une étape de détection d'un obstacle dans ledit environnement sur la base de la cartographie générée.

10. Procédé de conduite d'un véhicule automobile autonome ou d'aide à la conduite d'un véhicule automobile équipé d'au moins un système d'aide à la conduite avancé, **caractérisé en ce qu'**il comprend une opération de génération d'une cartographie d'un environnement physique du véhicule par la mise en oeuvre du procédé selon l'une des revendications 1 à 8.

11. Système (100) pour cartographier un environnement physique au moyen d'une grille d'occupation (200) contenant un ensemble de cellules ($g_{ij}$) associées à des probabilités d'occupation respectives, ledit procédé comportant un dispositif de mesure (10) comportant au moins un capteur d'estimation de distance (11), agencé pour mesurer une position potentielle d'un objet de l'environnement physique et fournir, pour la position potentielle mesurée, une première coordonnée, selon une première dimension, et une deuxième coordonnée, selon une deuxième dimension, dans un système de coordonnées du capteur à au moins deux dimensions ;

un module (20) d'identification d'un segment, représentant un intervalle de distribution de valeurs probables relatives à la position potentielle mesurée, qui s'étend selon l'une seule des deux dimensions du système de coordonnées du capteur (11), lesdites valeurs probables relatives à la position potentielle mesurée étant associées à des valeurs de probabilité données par une fonction de densité de probabilité (cp) représentable par une courbe présentant un sommet qui correspond à la position potentielle mesurée;
et un module (30) d'évaluation d'une probabilité d'occupation de chacune d'une pluralité de cellules potentiellement occupées de la grille d'occupation (200), pénétrées par ledit segment, comportant

- une unité (31) de détermination de caractéristiques d'une portion de segment ($x_i$),, incluse dans ladite cellule potentiellement occupée, lesdites caractéristiques comportant une longueur de ladite portion de segment;
- une unité (32) de calcul d'une probabilité d'occupation de ladite cellule potentiellement occupée en fonction de la portion de segment déterminée ($x_i$), et à l'aide de la fonction de densité de probabilité (cp), agencée pour effectuer une approximation de ladite probabilité d'occupation en calculant l'aire d'un rectangle dont l'une des dimensions correspond à la longueur de la portion de segment incluse dans ladite cellule potentiellement occupée et l'autre dimension est une valeur approximative de probabilité attribuée à ladite cellule potentiellement occupée.

12. Système (300) de détection d'un obstacle intégrant le système (100) pour cartographier un environnement physique selon la revendication 11 et un module (50) de détection d'un obstacle dans ledit environnement sur la base de la cartographie générée.

13. Véhicule automobile autonome ou équipé d'au moins un système d'aide à la conduite avancé, intégrant un système (100), tel que défini par la revendication 11, pour cartographier un environnement physique dudit véhicule au moyen d'une grille d'occupation contenant un ensemble de cellules définies par des probabilités d'occupation respectives. 1

**Patentansprüche**

1. Verfahren zur Kartographierung einer physikalischen Umgebung mittels eines Belegungsgitters (200), das eine Menge von Zellen ($g_{ij}$) enthält, die mit jeweiligen Belegungswahrscheinlichkeiten verknüpft sind, wobei das Verfahren Folgendes umfasst:

   einen Schritt des Messens (E0) einer potentiellen Position ($\mu$) eines Objekts der physikalischen Umgebung mittels mindestens eines Entfernungsschätzungssensors (11), bei dem der Sensor (11) für die gemessene potentielle Position ($\mu$) eine erste Koordinate ($\mu_r$) entlang einer ersten Dimension und eine zweite Koordinate ($\mu_\sigma$) entlang einer zweiten Dimension in einem Koordinatensystem des Sensors (11) mit mindestens zwei Dimensionen liefert;
   einen Schritt (E2) des Identifizierens eines Segments (S), das ein Verteilungsintervall von wahrscheinlichen Werten darstellt, welche die gemessene potentielle Position betreffen, das sich entlang einer einzigen der zwei Dimensionen des Koordinatensystems des Sensors erstreckt, wobei die wahrscheinlichen Werte, welche die gemessene potentielle Position ($\mu$) betreffen, mit Wahrscheinlichkeitswerten verknüpft sind, die von einer Wahrscheinlichkeitsdichtefunktion ($\varphi$) gegeben werden, die durch eine Kurve darstellbar ist, die einen Scheitel aufweist, welcher der gemessenen potentiellen Position ($\mu$) entspricht;
   und, wobei das identifizierte Segment in eine Untermenge von potentiell belegten Zellen ($c_i$) des Belegungsgitters (200) eindringt, für jede potentiell belegte Zelle ($c_i$) der Untermenge, einen Schritt (E3) des Bewertens einer Belegungswahrscheinlichkeit der potentiell belegten Zelle ($c_i$), der Folgendes umfasst:

      - einen Schritt (E4) des Bestimmens von Eigenschaften eines in der potentiell belegten Zelle ($c_i$) enthaltenen Segmentabschnitts ($\chi_i$), die eine Länge des Segmentabschnitts umfassen;
      - einen Schritt (E5) des Berechnens der Belegungswahrscheinlichkeit der potentiell belegten Zelle in Abhängigkeit von dem bestimmten Segmentabschnitt ($\chi_i$) und mittels der Wahrscheinlichkeitsdichtefunktion ($\varphi$), bei dem eine Näherung der Belegungswahrscheinlichkeit durch Berechnen der Fläche eines Rechtecks durchgeführt wird, von dem eine der Abmessungen der Länge des in der potentiell belegten Zelle enthaltenen Segmentabschnitts entspricht und die andere Abmessung ein der potentiell belegten Zelle zugewiesener Wahrscheinlichkeitsnäherungswert ist.

2. Verfahren nach Anspruch 1, **dadurch gekennzeichnet, dass** eine der zwei Dimensionen des Koordinatensystems des Sensors (11) für die Durchführung des Schritts des Identifizierens eines Segments in Abhängigkeit von Eigenschaften des Entfernungsmessungssensors (11) gewählt wird, die eine Messunsicherheit entlang jeder der zwei Dimensionen des Koordinatensystems des Sensors betreffen.

3. Verfahren nach einem der vorhergehenden Ansprüche, **dadurch gekennzeichnet, dass** das Koordinatensystem des Sensors (11) ein Polarkoordinatensystem ist, in dem jeder Punkt durch eine Entfernung und ein Azimut dargestellt ist und, in dem Fall, in dem die Messunsicherheit des Sensors (11) als zu vernachlässigen betrachtet wird, da sie in der Azimutdimension kleiner als ein vordefinierter Schwellenwert ist, das Segment (S), das ein Verteilungsintervall von wahrscheinlichen Werten darstellt, welche die gemessene potentielle Position betreffen, ein Segment der Geraden ist, die durch die gemessene potentielle Position ($\mu$) und einen Ursprung des Koordinatensystems des Sensors (11) definiert ist, wobei die Mitte des Segments der gemessenen potentiellen Position ($\mu$) entspricht.

4. Verfahren nach einem der vorhergehenden Ansprüche, **dadurch gekennzeichnet, dass** das Koordinatensystem des Sensors (11) ein Polarkoordinatensystem ist, in dem jeder Punkt durch eine Entfernung und ein Azimut definiert ist und, in dem Fall, in dem die Messunsicherheit des Sensors als zu vernachlässigen betrachtet wird, da sie in der Entfernungsdimension kleiner als ein vordefinierter Schwellenwert ist, das Segment (S), das ein Verteilungsintervall von wahrscheinlichen Werten darstellt, welche die gemessene potentielle Position ($\mu$) betreffen, ein Kreisbogen ist.

5. Verfahren nach dem vorhergehenden Anspruch, **dadurch gekennzeichnet, dass** es einen Näherungsschritt umfasst, bei dem der Kreisbogen durch ein Geradensegment genähert wird, das senkrecht zu der Richtung einer Linie ist, die durch die gemessene potentielle Position und einen Ursprungspunkt des Koordinatensystems des Sensors (11) definiert ist.

6. Verfahren nach einem der Ansprüche 1 bis 5, **dadurch gekennzeichnet, dass** der Wahrscheinlichkeitsnäherungswert, welcher der potentiell belegten Zelle zugewiesen wird, der Wahrscheinlichkeitswert ist, der von der Wahrscheinlichkeitsdichtefunktion am Mittelpunkt des Segmentabschnitts gegeben wird, der in der potentiell belegten Zelle enthalten ist.

7. Verfahren nach einem der Ansprüche 3 bis 6, wenn abhängig von Anspruch 2, **dadurch gekennzeichnet, dass** in dem Fall, in dem der Sensor ein Lidar ist, die Dimension Entfernung für die Durchführung des Schritts des Identifizierens eines Segments ausgewählt wird.

8. Verfahren nach einem der Ansprüche 3 bis 6, wenn abhängig von Anspruch 2, **dadurch gekennzeichnet, dass** in dem Fall, in dem der Sensor ein Radar ist, die Dimension Azimut für die Durchführung des Schritts des Identifizierens eines Segments ausgewählt wird.

9. Verfahren zur Erkennung eines Hindernisses, das die Erzeugung einer Kartographie einer physikalischen Umgebung durch die Durchführung des Verfahrens nach einem der Ansprüche 1 bis 8 und einen Schritt des Erkennens eines Hindernisses in der Umgebung basierend auf der erzeugten Kartographie umfasst.

10. Verfahren zum Fahren eines autonomen Kraftfahrzeugs oder zur Fahrassistenz eines Kraftfahrzeugs, das mit mindestens einem fortgeschrittenen Fahrassistenzsystem ausgerüstet ist, **dadurch gekennzeichnet, dass** es einen Vorgang zur Erzeugung einer Kartographie einer physikalischen Umgebung des Fahrzeugs durch die Durchführung des Verfahrens nach einem der Ansprüche 1 bis 8 umfasst.

11. System (100) zum Kartographieren einer physikalischen Umgebung mittels eines Belegungsgitters (200), das eine Menge von Zellen ($g_{ij}$) enthält, die mit jeweiligen Belegungswahrscheinlichkeiten verknüpft sind, wobei das Verfahren eine Messvorrichtung (10) umfasst, die mindestens einen Entfernungsschätzungssensor (11) umfasst, der dazu gestaltet ist, eine potentielle Position eines Objekts der physikalischen Umgebung zu messen und für die gemessene potentielle Position eine erste Koordinate entlang einer ersten Dimension und eine zweite Koordinate entlang einer zweiten Dimension in einem Koordinatensystem des Sensors mit mindestens zwei Dimensionen zu liefern;

ein Modul (20) zur Identifikation eines Segments, das ein Verteilungsintervall von wahrscheinlichen Werten darstellt, welche die gemessene potentielle Position betreffen, und das sich entlang einer einzigen der zwei Dimensionen des Koordinatensystems des Sensors (11) erstreckt, wobei die wahrscheinlichen Werte, welche die gemessene potentielle Position betreffen, mit Wahrscheinlichkeitswerten verknüpft sind, die durch eine Wahrscheinlichkeitsdichtefunktion ($\varphi$) gegeben werden, die durch eine Kurve darstellbar ist, die einen Scheitel aufweist, welcher der gemessenen potentiellen Position entspricht;
und ein Modul (30) zur Bewertung einer Belegungswahrscheinlichkeit von jeder von einer Vielzahl von potentiell belegten Zellen des Belegungsgitters (200), in die das Segment eindringt, das Folgendes umfasst:

- eine Einheit (31) zur Bestimmung von Eigenschaften eines Segmentabschnitts ($\chi_i$), der in der potentiell belegten Zelle enthalten ist, wobei die Eigenschaften eine Länge des Segmentabschnitts umfassen;
- eine Einheit (32) zur Berechnung einer Belegungswahrscheinlichkeit der potentiell belegten Zelle in Abhängigkeit von dem bestimmten Segmentabschnitt ($\chi_i$) und mittels der Wahrscheinlichkeitsdichtefunktion ($\varphi$), die dazu gestaltet ist, eine Näherung der Belegungswahrscheinlichkeit durch Berechnen der Fläche eines Rechtecks durchzuführen, von dem eine der Abmessungen der Länge des Segmentabschnitts entspricht, der in der potentiell belegten Zelle enthalten ist, und die andere Abmessung ein Wahrscheinlichkeitsnäherungswert ist, welcher der potentiell belegten Zelle zugewiesen ist.

12. System (300) zur Erkennung eines Hindernisses, welches das System (100) zum Kartographieren einer physikalischen Umgebung nach Anspruch 11 und ein Modul (50) zur Erkennung eines Hindernisses in der Umgebung basierend auf der erzeugten Kartographie aufnimmt.

13. Kraftfahrzeug, das autonom oder mit mindestens einem fortgeschrittenen Fahrassistenzsystem ausgerüstet ist, das ein System (100) nach Anspruch 11 zum Kartographieren einer physikalischen Umgebung des Fahrzeugs mittels eines Belegungsgitters aufnimmt, das eine Menge von Zellen enthält, die durch jeweilige Belegungswahrscheinlichkeiten definiert sind.

**Claims**

1. A method of mapping a physical environment using an occupancy grid (200) containing a set of cells ($g_{ij}$) associated with respective occupancy probabilities, said method comprising a step of measuring (E0), using at least one distance estimation sensor (11), a potential position ($\mu$) of an object in the physical environment, wherein the sensor (11) provides, for the measured potential position ($\mu$), a first coordinate ($\mu_r$) according to a first dimension and a second

coordinate ($\mu_\sigma$) according to a second dimension in a coordinate system of the sensor (11) having at least two dimensions;

a step of identifying (E2) a segment (S) representing a distribution interval of probable values relating to the measured potential position, which extends according to only one of the two dimensions of the coordinate system of the sensor, said probable values relate to the measured potential position ($\mu$) being associated with probability values given by a probability density function ($\phi$) that can be represented by a curve having an apex which corresponds to the measured potential position ($\mu$),

and, the identified segment penetrating a subset of potentially occupied cells ($c_i$) of the occupancy grid (200), for each potentially occupied cell ($c_i$) of said subset, a step of evaluating (E3) a probability of occupancy of said potentially occupied cell ($c_i$) comprising:

- a step of determining (E4) features of a segment portion ($\chi i$) included in said potentially occupied cell ($c_i$), comprising a length of said segment portion;
- a step of calculating (E5) the probability of occupancy of said potentially occupied cell as a function of the determined segment portion ($\chi_i$), and using the probability density function ($\phi$), wherein an approximation of said probability of occupancy is performed by calculating the area of a rectangle, one of the dimensions corresponds to the length of the segment portion included in said potentially occupied cell, and the other dimension is an approximate probability value assigned to said potentially occupied cell.

2. The method as claimed in claim 1, **characterized in that** one of the two dimensions of the coordinate system of the sensor (11) is chosen for the implementation of said step of identifying a segment as a function of features of the distance estimation sensor (11) relating to a measurement certainty according to each of the two dimensions of the coordinate system of the sensor.

3. The method as claimed in one of the preceding claims, **characterized in that** the coordinate system of the sensor (11) is a polar coordinate system in which each point is represented by a distance and an azimuth, and, in the case where the measurement uncertainty of the sensor (11) is considered to be negligible in the azimuth dimension because it is below a predefined threshold, the segment (S) representing the distribution interval of probable values relative to the measured potential position is a segment of the line defined by the potential measured position ($\mu$) and an origin of the coordinate system of the sensor (11), the middle of said segment corresponding to the potential measured position ($\mu$).

4. The method as claimed in one of the preceding claims, **characterized in that** the coordinate system of the sensor (11) is a polar coordinate system in which each point is represented by a distance and an azimuth and in the case where the measurement uncertainty of the sensor is considered negligible in the distance dimension because it is below a predefined threshold, the segment (S) representing a distribution interval of probable values relative to the measured potential position ($\mu$) is an arc of a circle.

5. The method as claimed in the preceding claim, **characterized in that** it comprises an approximation step wherein said arc of the circle is approximated by a line segment perpendicular to the direction of a line defined by the measured potential position and a point of origin of the coordinate system of the sensor (11).

6. The method as claimed in one of claims 1 to 5, **characterized in that** the approximate probability value assigned to the potentially occupied cell is the probability value given by the probability density function at the midpoint of the segment portion included in said potentially occupied cell.

7. The method as claimed in one of claims 3 to 6, when dependent on claim 2, **characterized in that** in the case where the sensor is a LIDAR sensor, the distance dimension is chosen for the implementation of said step of identifying a segment.

8. The method as claimed in one of claims 3 to 6, when dependent on claim 2, **characterized in that** in the case where the sensor is a RADAR sensor, the azimuth dimension is chosen for the implementation of said step of identifying a segment.

9. A method of detecting an obstacle, comprising generating a mapping of a physical environment by implementing the method as claimed in one of claims 1 to 8 and a step of detecting an obstacle in said environment based on the generated mapping.

**10.** A method of driving an autonomous motor vehicle or of assisting the driving of a motor vehicle fitted with at least one advanced driver assistance system, **characterized in that** it comprises an operation of generating a mapping of a physical environment of the motor vehicle by implementing the method as claimed in one of claims 1 to 8.

**11.** A system (100) for mapping a physical environment using an occupancy grid (200) containing a set of cells ($g_{ij}$) associated with respective occupancy probabilities, said method including a measuring device (10) including at least one distance estimation sensor (11) arranged to measure a potential position of an object in the physical environment and to provide, for the measured potential position, a first coordinate according to a first dimension and a second coordinate according to a second dimension in a coordinate system of the sensor having at least two dimensions;

a segment identification module (20) representing a distribution interval of probable values relating to the measured potential position which extends according to only one of the two dimensions of the coordinate system of the sensor (11), said probable values relating to the measured potential position being associated with probability values given by a probability density function ($\varphi$)that can be represented by a curve having an apex which corresponds to the measured potential position; and
and a module (30) for evaluating a probability of occupancy of each of a plurality of potentially occupied cells of the occupancy grid (200), penetrated by said segment, the module including:

- a unit (31) for determining the features of a segment portion ($\chi_i$) included in said potentially occupied cell, said features including a length of said segment portion;
- a unit (32) for calculating a probability of occupancy of said potentially occupied cell as a function of the determined segment portion ($\chi_i$) and using the probability density function ($\varphi$), arranged to perform an approximate of said probability of occupancy by calculating the area of a rectangle, one of the dimensions corresponds to the length of the segment portion included in said potentially occupied cell, and the other dimension is an approximate probability value assigned to said potentially occupied cell.

**12.** A system (300) for detecting an obstacle, integrating the system (100) for mapping a physical environment as claimed in claim 11 and a module (50) for detecting an obstacle in said environment on the basis of the generated mapping.

**13.** An autonomous motor vehicle or fitted with at least one advanced driver assistance system, integrating a system (100) as defined by claim 11, for mapping a physical environment of said motor vehicle using an occupancy grid containing a set of cells defined by respective occupancy probabilities.

[Fig. 1]

[Fig. 2]

E0 → $\mu$

E1 → $\mu_r, \mu_a, \mu_x, \mu_y$

E2 → S

E4

E40: $x_{3\sigma\pm} = \mu_x \pm \cos(\alpha) \cdot 3\sigma$
$y_{3\sigma\pm} = \mu_y \pm \sin(\alpha) \cdot 3\sigma$

E41: $y = a \cdot x + b$
$a = \frac{y_{3\sigma+} - y_{3\sigma-}}{x_{3\sigma+} - x_{3\sigma-}}$
$b = y_{3\sigma-} - x_{3\sigma-} \cdot a$

E42: $y_{Li} = a \cdot x_{Li} + b$  $y_{Ri} = a \cdot x_{Ri} + b$
$x_{Ti} = (y_{Ti} - b)/a$  $x_{Bi} = (y_{Bi} - b)/a$

E43: $(x_1, y_1), (x_2, y_2)$

E44: $d_i = \sqrt{(x_1 - x_2)^2 + (y_1 - y_2)^2}$

E45: $r_i = \sqrt{\left(\frac{x_1 - x_2}{2} - \mu_x\right)^2 + \left(\frac{y_1 - y_2}{2} - \mu_y\right)^2}$

E3

E50: $\varphi(r_i) = \frac{1}{\sqrt{2\pi}\sigma} e^{-\frac{(r_i - r)^2}{2\sigma}}$

E51: $p(r_i) = \int \varphi(r)dr \approx \varphi(r_i) \cdot d_i$

E6 → GEN

[Fig. 3]

[Fig. 4]

[Fig. 5]

[Fig. 6]

$$\varphi(x) = \frac{1}{\sqrt{2\pi}} e^{-\frac{1}{2}x^2}$$

[Fig. 7]

...

[Fig. 8a]

[Fig. 8b]

[Fig. 8c]

[Fig. 9]

[Fig. 10]

EP 3 757 601 B1

[Fig. 11]

23

**EP 3 757 601 B1**

**Documents brevets cités dans la description**

- US 2017269201 A1